(19) Europäisches Patentamt
European Patent Office
Office européen des brevets

(11) EP 3 035 799 B1

(12) **EUROPEAN PATENT SPECIFICATION**

(45) Date of publication and mention of the grant of the patent:
**10.10.2018 Bulletin 2018/41**

(21) Application number: **14838100.7**

(22) Date of filing: **20.08.2014**

(51) Int Cl.:
***A01N 43/40*** $^{(2006.01)}$ ***A01N 43/653*** $^{(2006.01)}$
***A01N 37/18*** $^{(2006.01)}$ ***A01N 33/18*** $^{(2006.01)}$

(86) International application number:
**PCT/US2014/051851**

(87) International publication number:
**WO 2015/026923 (26.02.2015 Gazette 2015/08)**

(54) **HERBICIDAL COMPOSITIONS COMPRISING SULFENTRAZONE plus PROPYZAMIDE AND SULFENTRAZONE PLUS PROPYZAMIDE PLUS ETHALFLURALIN**

HERBIZIDZUSAMMENSETZUNGEN MIT SULFENTRAZON PLUS PROPYZAMID UND SULFENTRAZON PLUS PROPYZAMID PLUS ETHALFLURALIN

COMPOSITIONS HERBICIDES COMPORTANT DE LA SULFENTRAZONE ET DU PROPYZAMIDE ET DE LA SULFENTRAZONE ET DU PROPYZAMIDE ET DE L'ÉTHALFLURALINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2013 US 201361868234 P**

(43) Date of publication of application:
**29.06.2016 Bulletin 2016/26**

(73) Proprietor: **Dow AgroSciences LLC**
**Indianapolis, IN 46268 (US)**

(72) Inventors:
- **DEGENHARDT, Rory**
  **Edmonton AB T6R 3G2 (CA)**
- **JURAS, Len**
  **Saskatoon**
  **SK S7N 4L8 (CA)**
- **MANN, Richard K.**
  **Franklin, IN 46131 (US)**

(74) Representative: **f & e patent**
**Fleischer, Engels & Partner mbB, Patentanwälte**
**Braunsberger Feld 29**
**51429 Bergisch Gladbach (DE)**

(56) References cited:

| | |
|---|---|
| **WO-A1-03/047343** | **AU-A1- 2011 204 809** |
| **FR-A1- 2 532 152** | **US-A1- 2004 266 623** |
| **US-A1- 2009 156 401** | **US-A1- 2010 292 081** |
| **US-A1- 2010 292 082** | **US-A1- 2011 312 494** |
| **US-A1- 2012 178 626** | **US-A1- 2013 137 576** |

- **GRICHAR, W.: 'Use of Sulfentrazone in a Peanut (Arachis hypogaea) Herbicide Program.' THE TEXAS JOURNAL OF AGRICULTURE AND NATURAL RESOURCES, [Online] vol. 19, 2006, pages 72 - 79, XP055217909 Retrieved from the Internet: <URL:hftp://www.tarleton.edu/Departments/txjanrNolumesNol%2019%20-% . 202006/V19_06_Art08.pdf> [retrieved on 2014-10-16]**
- **FMC CORPORATION.: 'Postemergence Goosgrass Control.', [Online] 2010, XP055217913 Retrieved from the Internet: <URL:http://www.fmcprosolutions.com/LinkClick.aspx ? fileticket=_VFTWpnID5Q%3D&tabid=1931&mid=33 79> [retrieved on 2014-10-16]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Cross Reference to Related Applications

This application claims the benefit of U.S. Provisional Patent Application Serial No. 61/868,234 filed August 21, 2013.

Field

Provided herein are herbicidal compositions comprising (a) *N*-[2,4-dichloro-5-[4-(difluoromethyl)-4,5-dihydro-3-methyl-5-oxo-1*H*-1,2,4-triazol-1-yl]phenyl]methane-sulfonamide (sulfentrazone) and (b) 3,5-dichloro-*N*-(1,1-dimethyl-2-propyn-1-yl)benzamide (propyzamide).

Provided herein are also methods of controlling undesirable vegetation comprising applying (a) sulfentrazone and (b) propyzamide.

Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

AU 2011204809 relates to a herbicidal composition comprising sulfentrazone and imazapyr; US 2009/156401 relates to a herbicidal composition comprising sulfentrazone and quinclorac; US 2004/266623 describes a herbicidal composition comprising sulfentrazone, quinclorac, and 2,4-D (or MCPA); US 2010/292082 relates to a herbicidal composition comprising sulfentrazone and metsulfuron methyl; US 2011/312494 relates to a herbicidal composition comprising propyzamide and aminopyralid; GRICHAR, W.: "Use of Sulfentrazone in a Peanut (Arachis hypogaea) Herbicide Program.", THE TEXAS JOURNAL OF AGRICULTURE AND NATURAL RESOURCES, vol. 19, 2006, pages 72-79, XP055217909, describes a herbicidal composition comprising sulfentrazone and ethalfluralin.

However, there remains a need for additional and improved compositions and methods that are effective in controlling undesirable vegetation.

Summary

Provided herein are herbicidal compositions comprising a herbicidally effective amount of (a) sulfentrazone, a compound of formula (I)

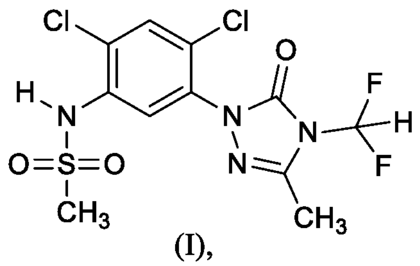

(I),

and (b) propyzamide, a compound of formula (II)

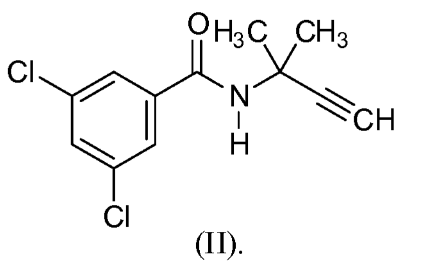

(II).

The compositions may also contain an agriculturally acceptable adjuvant or carrier.

Provided herein are also methods of controlling undesirable vegetation comprising applying (a) sulfentrazone, a compound of formula (I), and (b) propyzamide, a compound of formula (II).

## Detailed Description

DEFINITIONS

As used herein, the compound of formula (I) has the following structure:

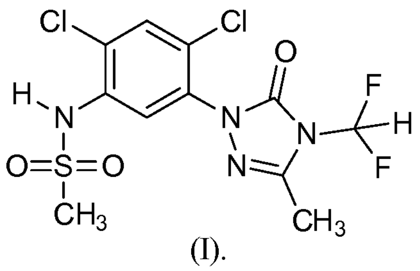

(I).

The compound of formula (I) can be identified by the Chemical Abstracts Services (CAS) name *N*-[2,4-dichloro-5-[4-(difluoromethyl)-4,5-dihydro-3-methyl-5-oxo-1*H*-1,2,4-triazol-1-yl]phenyl]methanesulfonamide and by the common name sulfentrazone. Exemplary uses of the compound of formula (I) include controlling annual broadleaf weeds and some grasses in chickpeas, field peas, flax and sunflowers. It is applied pre-emergence (PRE) or pre-plant incorporated (PPI).

As used herein, the compound of formula (II) has the following structure:

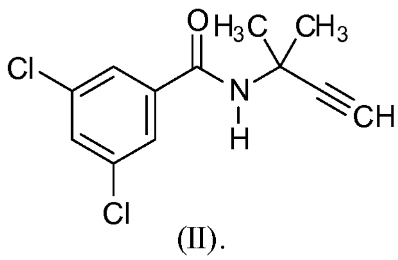

(II).

The compound of formula (II) can be identified by the CAS name 3,5-dichloro-*N*-(1,1-dimethyl-2-propyn-1-yl)benzamide and by the common name propyzamide. Propyzamide is registered for late-fall and early-spring use for controlling weeds in alfalfa, trefoil, pulse crops, canola, oilseed rape, tree and vine crops, lettuce, established pastures and some ornamental and horticultural crops for control of grass and broadleaf weeds.

COMPOSITIONS AND METHODS

Provided herein are herbicidal compositions comprising a herbicidally effective amount of (a) sulfentrazone, a compound of formula (I)

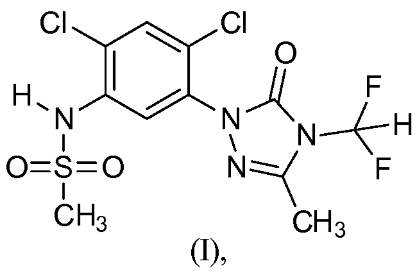

(I),

and (b) propyzamide, a compound of formula (II)

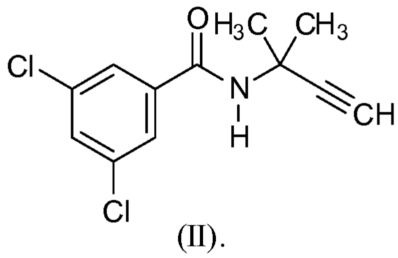

(II).

Provided herein are also methods of controlling undesirable vegetation comprising contacting the vegetation or the locus thereof, *i.e.*, area adjacent to the vegetation, with or applying to the soil to prevent the emergence or growth of vegetation, a herbicidally effective amount (a) of the compound of formula (I) and (b) of the compound of formula (II). In certain embodiments, the methods employ the compositions described herein.

Furthermore, in some embodiments, the combination of compound (I) and compound (II) exhibit synergism, *i.e.*, the herbicidal active ingredients are more effective in combination than when applied individually. Synergism has been defined as "an interaction of two or more factors such that the effect when combined is greater than the predicted effect based on the response of each factor applied separately." Senseman, S., Ed. Herbicide Handbook. 9th ed. Lawrence: Weed Science Society of America, 2007. In certain embodiments, the compositions exhibit synergy as determined by the Colby equation. (Colby, S. R. Calculation of the synergistic and antagonistic response of herbicide combinations. Weeds 1967, 15, 20-22.)

Herbicidal activity is exhibited by the compounds when they are applied directly to the plant or to the locus of the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted to promote non-selective or selective herbicidal action. In some embodiments, the compositions described herein are applied as a post-emergence application, pre-emergence application, or pre-plant incorporated application to non-germinated seeds or to relatively immature undesirable vegetation to achieve the maximum control of weeds.

In some embodiments, the compositions and methods provided herein are utilized to control weeds in crops, including but not limited to wheat, barley, oats, rye, sorghum, corn/maize, pulse crops (including but not limited to e.g., common bean, field pea, chickpea, lentil and faba bean), canola, oilseed rape, mustard crops, soybeans, pastures, grasslands, rangelands, fallow land, turf, tree and vine orchards, industrial vegetation management (IVM) and rights-of-way.

The compositions and methods described herein are used to control undesirable vegetation in glyphosate tolerant-, glufosinate tolerant-, dicamba tolerant-, phenoxy auxin tolerant-, pyridyloxy auxin tolerant-, aryloxyphenoxypropionate tolerant-, acetyl CoA carboxylase (ACCase) inhibitor tolerant-, imidazolinone tolerant-, acetolactate synthase (ALS) inhibitor tolerant-, 4-hydroxyphenyl-pyruvate dioxygenase (HPPD) inhibitor tolerant-, protoporphyrinogen oxidase (PPO) inhibitor tolerant-, triazine tolerant- and bromoxynil tolerant-crops (such as, but not limited to, pulse crops, soybean, cotton, canola/oilseed rape, cereals, corn, turf, etc.), for example, in conjunction with glyphosate, glufosinate, dicamba, phenoxy auxins, pyridyloxy auxins, aryloxyphenoxypropionates, ACCase inhibitors, imidazolinones, ALS inhibitors, HPPD inhibitors, PPO inhibitors, triazines and bromoxynil. The compositions and methods may be used in controlling undesirable vegetation in crops possessing multiple or stacked traits conferring tolerance to multiple chemistries and/or inhibitors of multiple modes-of-action. In some embodiments, the compound of formula (I) and the compound of formula (II) are used in combination with herbicides that are selective for the crop being treated and which complement the spectrum of weeds controlled by these compounds at the application rate employed. In some embodiments, the compositions described herein and other complementary herbicides are applied at the same time, either as a combination formulation or as a tank-mix, at the same time or as sequential applications.

The compositions and methods provided herein are utilized to control undesirable vegetation. Undesirable vegetation includes, but is not limited to, undesirable vegetation that occurs in cereals, range and pasture, row crops (*e.g.*, corn, soybean, cotton, canola), pulse crops (*e.g.*, common bean, field pea, chickpea, lentil and faba bean), canola, oilseed rape, mustard crops, turf, trees, vines, and ornamental species and non-crop settings, (*e.g.*, rights-of-way, IVM).

In some embodiments, the methods provided herein are utilized to control undesirable vegetation in cereals. In certain embodiments, the undesirable vegetation is *Cirsium arvense* (L.) Scop. (Canada thistle, CIRAR*), Galium aparine* L. (catchweed bedstraw, GALAP), *Kochia scoparia* (L.) Schrad. (kochia, KCHSC), *Lamium purpureum* L. (purple deadnettle, LAMPU), *Matricaria recutita* L. (wild chamomile, MATCH), *Matricaria matricarioides* (Less.) Porter (pineappleweed, MATMT), *Papaver rhoeas* L. (common poppy, PAPRH), *Polygonum convolvulus* L. (wild buckwheat, POLCO), *Salsola tragus* L. (Russian thistle, SASKR), *Stellaria media* (L.) Vill. (common chickweed, STEME), *Veronica persica*

Poir. (Persian speedwell, VERPE), *Viola arvensis* Murr. (field violet, VIOAR), or *Viola tricolor* L. (wild violet, VIOTR).

In some embodiments, the methods provided herein are utilized to control undesirable vegetation in range and pasture. In certain embodiments, the undesirable vegetation is *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Euphorbia esula* L. (leafy spurge, EPHES), *Lactuca serriola* L./Torn. (prickly lettuce, LACSE), *Plantago lanceolata* L. (buckhorn plantain, PLALA), *Rumex obtusifolius* L. (broadleaf dock, RUMOB), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (dandelion, TAROF), *Trifolium repens* L. (white clover, TRFRE), or *Urtica dioica* L. (common nettle, URTDI).

In some embodiments, the methods provided herein are utilized to control undesirable vegetation found in row crops. In certain embodiments, the undesirable vegetation is *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (western ragweed, AMBPS), *Ambrosia trifida* L. (giant ragweed, AMBTR), *Asclepias syriaca* L. (common milkweed, ASCSY), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Erigeron bonariensis* L. (hairy fleabane, ERIBO), *Erigeron canadensis* L. (Canadian fleabane, ERICA), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Sida spinosa* L. (prickly sida, SIDSP), *Sinapis arvensis* L. (wild mustard, SINAR), *Solanum ptychanthum* Dunal (eastern black nightshade, SOLPT), or *Xanthium strumarium* L. (common cocklebur, XANST).

In some embodiments, the methods provided herein are utilized to control undesirable vegetation found in pulse crops. In certain embodiments, the undesirable vegetation is *Avena fatua* (wild oats, AVEFA), *Hordeum jubatum* (foxtail barley, HORJU), *Kochia scoparia* (kochia, KCHSC), *Sinapis arvensis* L. (wild mustard, SINAR) and *Taraxacum officinale* (dandelion, TAROF).

In certain embodiments, the compositions and methods provided herein are utilized to control undesirable vegetation including *Avena*, *Hordeum*, *Kochia* and *Sinapis.*

In some embodiments, the combination of compound (I) and the compound of formula (II) are used to control *Avena fatua* (wild oats, AVEFA), *Hordeum jubatum* (foxtail barley, HORJU), *Kochia scoparia* (kochia, KCHSC) and *Sinapis arvensis* L. (wild mustard, SINAR).

The combination of the compound of formula (I) and the compound of formula (II) may be used to control herbicide resistant or tolerant weeds. The methods employing the combination of a compound of formula (I) and the compound of formula (II) and the compositions described herein may also be employed to control herbicide resistant or tolerant weeds. Exemplary resistant or tolerant weeds include, but are not limited to, biotypes resistant or tolerant to ALS inhibitors, photosystem II inhibitors, ACCase inhibitors, synthetic auxins, photosystem I inhibitors, EPSP synthase inhibitors, microtubule assembly inhibitors, lipid synthesis inhibitors, PPO inhibitors, carotenoid biosynthesis inhibitors, very long chain fatty acid (VLCFA) inhibitors, phytoene desaturase (PDS) inhibitors, glutamine synthetase inhibitors, HPPD inhibitors, mitosis inhibitors, cellulose biosynthesis inhibitors, herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to multiple herbicides, multiple chemical classes, and multiple herbicide modes-of-action.

In the compositions and methods described herein, the compound of formula (I) is used in combination with the compound of formula (II). With regard to the compositions, in some embodiments, the weight ratio of the compound of formula (I) to the compound of formula (II) is within the range from about 1:50 to 10:1, from about 1:40 to about 5:1, from about 1:30 to about 2:1, from about 1:25 to about 1:10, from about 1:20 to about 1:7 and from about 1:18 to about 1:4. In certain embodiments, the weight ratio of the compound of formula (I) to the compound of formula (II) is within the range from about 1:10 to about 1:8. With respect to the methods, in certain embodiments, the methods comprise contacting the undesirable vegetation or locus thereof or applying to the soil to prevent the emergence or growth of vegetation a composition described herein. In some embodiments, the composition is applied at an application rate from about 500 grams active ingredient per hectare (g ai/ha) to about 3000 g ai/ha based on the total amount of active ingredients in the composition. In certain embodiments, the composition is applied at an application rate from about 400 g ai/ha to about 2500 g ai/ha based on the total amount of active ingredients in the composition. In certain embodiments, the composition is applied at an application rate from about 1000 g ai/ha to about 1500 g ai/ha based on the total amount of active ingredients in the composition. In some embodiments, the methods comprise contacting the undesirable vegetation or locus thereof or applying to the soil or water to prevent the emergence or growth of vegetation with the

compound of formula (I) and the compound of formula (II), e.g., sequentially or simultaneously. In some embodiments, the compound of formula (II) is applied at a rate from about 300 g ai/ha to about 1500 g ai/ha and the compound of formula (I) is applied at a rate from about 25 grams ai per hectare (g ai/ha) to about 250 g ai/ha. In some embodiments, the compound of formula (II) is applied at a rate from about 450 g ai/ha to about 900 g ai/ha and the compound of formula (I) is applied at a rate from about 52 grams ai/ha to about 105 g ai/ha. In certain embodiments, the methods and compositions utilizing a compound of formula (I) in combination with a compound of formula (II) are used to control AVEFA, HORJU, KCHSC and SINAR.

The components of the mixtures described herein can be applied either separately, sequentially, tank-mixed or as part of a multipart herbicidal system.

The mixtures described herein can be applied in conjunction with one or more other herbicides to control a wider variety of undesirable vegetation. When used in conjunction with other herbicides, the composition can be formulated with the other herbicide or herbicides, tank-mixed with the other herbicide or herbicides or applied sequentially with the other herbicide or herbicides. Some of the herbicides that can be employed in conjunction with the compositions and methods described herein include, but are not limited to: 4-CPA, 4-CPB, 4-CPP, 2,4-D, 2,4-D choline salt, 2,4-D esters and amines, 2,4-DB, 3,4-DA, 3,4-DB, 2,4-DEB, 2,4-DEP, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofosmethyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, bentazon, benthiocarb, benzadox, benzfendizone, benzipram, benzobicyclon, benzofenap, benzofluor, benzoylprop, benzthiazuron, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, chlorprocarb, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clacyfos, clethodim, cliodinate, clodinafop-propargyl, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop-butyl, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethbenzamide, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl + isoxadifen-ethyl, fenoxasulfone, fenquinotrione, fenteracol, fenthiaprop, fentrazamide, fenuron, ferrous sulfate, flamprop, flamprop-M, flazasulfuron, florasulam, fluazifop, fluazifop-P-butyl, fluazolate, flucarbazone, flucetosulfuron, fluchloralin, flufenacet, flufenican, flufenpyr-ethyl, flumetsulam, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glufosinate, glufosinate-ammonium, glufosinate-P-ammonium, glyphosate, halauxifen, halauxifen-methyl, halosafen, halosulfuron-methyl, haloxydine, haloxyfop-methyl, haloxyfop-P-methyl, hexachloroacetone, hexaflurate, hexazinone, imazamethabenz, imazamox, imazapic, imazapyr, imazaquin, imazosulfuron, cloransulam-methyl, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxaziclomefone, oxyfluorfen, paraflufen-ethyl, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide,

potassium cyanate, pretilachlor, primisulfuron-methyl, procyazine, prodiamine, profluazol, profluralin, profoxydim, proglinazine, prohexadione-calcium, prometon, prometryn, propachlor, propanil, propaquizafop, propazine, propham, propisochlor, propoxycarbazone, propyrisulfuron, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiafenacil, tiocarbazil, tioclorim, tolpyralate, topramezone, tralkoxydim, triafamone, tri-allate, triasulfuron, triaziflam, tribenuron, tribenuron-methyl, tricamba, triclopyr choline salt, triclopyr esters and salts, tridiphane, trietazine, trifloxysulfuron, trifludimoxazin, trifluralin, triflusulfuron, trifop, trifopsime, trihydroxytriazine, trimeturon, tripropindan, tritac tritosulfuron, vernolate, xylachlor and salts, choline salts, esters, optically active isomers and mixtures thereof.

In some embodiments, the compositions described herein are employed in combination with one or more herbicide safeners, such as AD-67 (MON 4660), benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148, 1-[4-(*N*-(2-methoxybenzoyl)sulfamoyl)phenyl]-3-methylurea, *N*-(2-methoxybenzoyl)-4-[(methylaminocarbonyl)amino]benzenesulfonamide and *N*-phenyl-sulfonylbenzoic acid amides, to enhance their selectivity. In some embodiments, the safeners are employed in rice, cereal, corn, or maize settings. In some embodiments, the safener is cloquintocet or an ester or salt thereof. In certain embodiments, cloquintocet is utilized to antagonize harmful effects of the compositions on rice and cereals. In some embodiments, the safener is cloquintocet (mexyl).

In some embodiments, the compositions provided herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, microcapsules or wettable powders, or liquids, such as, for example, emulsifiable concentrates, solutions, emulsions or suspensions. They can also be provided as a pre-mix or tank-mixed.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N,N*-dimethyl alkylamides, dimethyl sulfoxide, liquid fertilizers and the like. In certain embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, *inter alia*, in McCutcheon's

Detergents and Emulsifiers Annual, MC Publishing Corporation: Ridgewood, NJ, 1998, and in Encyclopedia of Surfactants, Vol. I-III, Chemical Publishing Company: New York, 1980-81. Surface-active agents include, but are not limited to salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include, but are not limited to, compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

In some embodiments, the concentration of the active ingredients in the compositions described herein is from about 0.0005 to 98 percent by weight. In some embodiments, the concentration is from about 0.0006 to 90 percent by weight. In compositions designed to be employed as concentrates, the active ingredients, in certain embodiments, are present in a concentration from about 0.1 to 98 weight percent, and in certain embodiments from about 0.5 to 90 weight percent. Such compositions are, in certain embodiments, diluted with an inert carrier, such as water, before application. The diluted compositions usually applied to weeds or the locus of weeds contain, in certain embodiments, about 0.0003 to 10.5 weight percent active ingredient and in certain embodiments contain about 0.0008 to 10.0 weight percent.

The present compositions can be applied to weeds or their locus by the use of conventional ground or aerial dusters, sprayers, and granule applicators, and by other conventional means known to those skilled in the art.

The described embodiments and following examples are for illustrative purposes and are not intended to limit the scope of the claims. Other modifications, uses, or combinations with respect to the compositions described herein will be apparent to a person of ordinary skill in the art without departing from the spirit and scope of the claimed subject matter.

## Examples

### Evaluation of Herbicidal Activity of Mixtures under Field Conditions

### Methodology

These trials were conducted under field conditions in western Canada. The trials were designed as split-block, factorial designs with timing (spring vs. fall), Authority 480 (sulfentrazone) rate (0, 52 or 105 g ai/ha), Kerb™ SC (propyzamide) rate (0, 450 or 900 g ai/ha) as the main factors and Edge™ Granular (ethalfluralin) application (0 or 1100 g ai/ha) as the split-block factor (data for additional application of ethalfluralin not shown). Edge™ was applied to test plots at a rate of 1100 g ai/ha using a granular applicator in the fall of 2011 (17 Oct to 09 Nov). Authority 480 and Kerb™ SC treatments were applied to test plots either in the fall prior to or after Edge™ application (17 Oct to 03 Nov), or in the spring of 2012 (24 Apr to 05 May). An untreated control was also included in each trial. Following herbicide treatment application in the spring of 2012, lentils were seeded or field peas were seeded into plots. Weed efficacy assessments were taken at 9-15 days after the spring application (DAA2) for an initial evaluation, 33 DAA2 for an early evaluation, 48-52 DAA2 for a mid evaluation, and 77-85 DAA2 for a late evaluation. The trial sites had naturally occurring populations of weeds. The weed spectrum included, but was not limited to, *Avena fatua* (wild oats, AVEFA), *Hordeum jubatum* (foxtail barley, HORJU), *Kochia scoparia* (kochia, KCHSC) and *Sinapis arvensis* L. (wild mustard, SINAR).

### Evaluation

The treated plots and control plots were rated blind at various intervals after application. Ratings were based of Percent (%) Visual weed control, where 0 corresponds to no injury and 100 corresponds to complete kill.

Data were collected for all trials and analyzed using various statistical methods.

Colby's equation was used to determine the herbicidal effects expected from the mixtures (Colby, S. R. Calculation of the synergistic and antagonistic response of herbicide combinations. Weeds 1967, 15, 20-22).

The following equation was used to calculate the expected activity of mixtures containing two active ingredients, A and B:

$$Expected = A + B - (A \times B/100)$$

A = observed efficacy of active ingredient A at the same concentration as used in the mixture;

B = observed efficacy of active ingredient B at the same concentration as used in the mixture.

The results are summarized in Tables 1-2.

Table 1. Synergistic weed control from Fall applications of Sulfentrazone + Propyzamide in field trials

| Sulfentrazone | Propyzamide | HORJU | | KCHSC | | SINAR | |
|---|---|---|---|---|---|---|---|
| g ai/ha | g ai/ha | Obs | Exp | Obs | Exp | Obs | Exp |
| 52 | 0 | 15 | - | 30 | - | - | - |
| 0 | 450 | 18 | - | 0 | - | - | - |
| 52 | 450 | 45 | 30 | 55 | 30 | - | - |
| 105 | 0 | 28 | - | 40 | - | - | - |
| 0 | 450 | 18 | - | 0 | - | - | - |
| 105 | 450 | 58 | 41 | 75 | 40 | - | - |
| 52 | 0 | - | - | - | - | 38 | - |
| 0 | 900 | - | - | - | - | 38 | - |
| 52 | 900 | - | - | - | - | 65 | 62 |
| 105 | 0 | 28 | - | 40 | - | - | - |
| 0 | 900 | 59 | - | 65 | - | - | - |
| 105 | 900 | 78 | 71 | 90 | 79 | - | - |

HORJU = *Hordeum jubatum* (foxtail barley)
KCHSC = *Kochia scoparia* (kochia)
SINAR = *Sinapis arvensis* L. (wild mustard)
g ai/ha = grams active ingredient per hectare
Obs = Observed percent weed control
Exp = Expected percent weed control as predicted by the Colby equation

Table 2. Synergistic weed control from Spring applications of Sulfentrazone + Propyzamide in field trials

| Sulfentrazone | Propyzamide | AVEFA | | HORJU | | KCHSC | |
|---|---|---|---|---|---|---|---|
| g ai/ha | g ai/ha | Obs | Exp | Obs | Exp | Obs | Exp |
| 52 | 0 | 0 | | 15 | - | - | - |
| 0 | 450 | 30 | | 30 | - | - | - |
| 52 | 450 | 70 | 30 | 64 | 41 | - | - |
| 105 | 0 | 15 | - | - | - | - | - |
| 0 | 450 | 30 | - | - | - | - | - |
| 105 | 450 | 64 | 73 | - | - | - | - |

(continued)

| Sulfentrazone | Propyzamide | AVEFA | | HORJU | | KCHSC | |
|---|---|---|---|---|---|---|---|
| g ai/ha | g ai/ha | Obs | Exp | Obs | Exp | Obs | Exp |
| 52 | 0 | - | - | 15 | - | 20 | - |
| 0 | 900 | - | - | 68 | - | 0 | - |
| 52 | 900 | - | - | 84 | 73 | 70 | 20 |
| 105 | 0 | - | - | - | - | - | - |
| 0 | 900 | - | | - | - | - | - |
| 105 | 900 | - | - | - | - | - | - |

AVEFA = *Avena fatua* (wild oats)
HORJU = *Hordeum jubatum* (foxtail barley)
KCHSC = *Kochia scoparia* (kochia)
g ai/ha - grams active ingredient per hectare
Obs = Observed percent weed control
Exp = Expected percent weed control as predicted by the Colby equation

**Claims**

1. A herbicidal composition comprising a herbicidally effective amount of (a) sulfentrazone, a compound of formula (I)

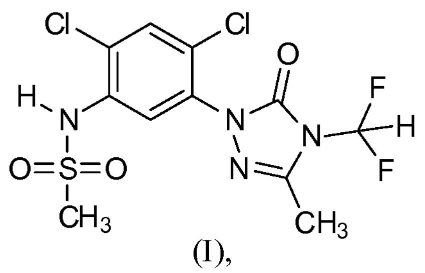

(I),

and (b) propyzamide, a compound of formula (II)

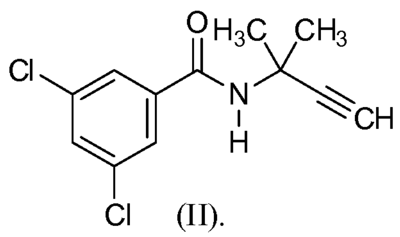

(II).

2. The composition of claim 1, wherein the weight ratio of the compound of formula (I) to the compound of formula (II) is within the range from about 1:18 to about 1:4.

3. The composition of claim 1 or 2, further comprising an agriculturally acceptable adjuvant or carrier.

4. The composition of claim 1 or 2, which is synergistic as determined by the Colby equation.

5. A method of controlling undesirable vegetation which comprises contacting the vegetation or the locus thereof with or applying to the soil to prevent the emergence or growth of vegetation the composition of claim 1 or 2.

6. A method of controlling undesirable vegetation which comprises contacting the vegetation or the locus thereof with

or applying to the soil to prevent the emergence or growth of vegetation a herbicidally effective amount of:

a) sulfentrazone, a compound of formula (I)

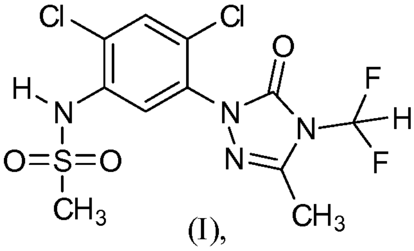

(I),

and (b) propyzamide, a compound of formula (II)

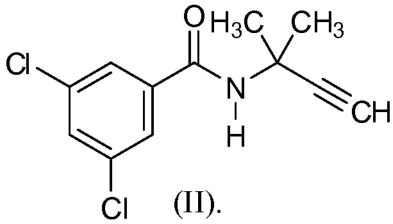

(II).

7. The method of claim 6, wherein the undesirable vegetation is controlled in wheat, barley, oats, rye, sorghum, corn, maize, pulse crops (*e.g.*, common bean, field pea, chickpea, lentil and faba bean), canola, oilseed rape, mustard crops, soybeans, pastures, grasslands, rangelands, fallow land, turf, tree and vine orchards, industrial vegetation management or rights-of-way, wherein preferably the (a) and (b) are applied to pulse crops.

8. The method of claim 6, wherein the undesirable vegetation is non-germinant to immature.

9. The method of claim 6, wherein the (a) and (b) are applied pre-emergence or pre-plant incorporated to the undesirable vegetation or crop or are applied post-emergence to the undesirable vegetation or crop.

10. The method of claim 6, wherein the undesirable vegetation is controlled in a glyphosate-, glufosinate-, dicamba-, phenoxy auxin-, pyridyloxy auxin-, aryloxyphenoxypropionate-, acetyl CoA carboxylase (ACCase) inhibitor-, imidazolinone-, acetolactate synthase (ALS) inhibitor-, 4-hydroxyphenyl-pyruvate dioxygenase (HPPD) inhibitor-, protoporphyrinogen oxidase (PPO) inhibitor-, triazine- or bromoxynil-tolerant crop, wherein the tolerant crop preferably possesses multiple or stacked traits conferring tolerance to multiple herbicides or inhibitors of multiple modes-of-action.

11. The method of claim 6, wherein the undesirable vegetation comprises a herbicide resistant or tolerant weed, wherein the resistant or tolerant weed is a biotype resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action, quinclorac, arylaminopropionic acids, difenzoquat, endothall or organoarsenicals.

12. The method of claim 11, wherein the resistant or tolerant weed is a biotype with resistance or tolerance to multiple herbicides, multiple chemical classes, or inhibitors of multiple herbicide modes-of-action.

**Patentansprüche**

1. Eine herbizide Zusammensetzung umfassend eine herbizid wirksame Menge von (a) Sulfentrazon, eine Verbindung

der Formel (I)

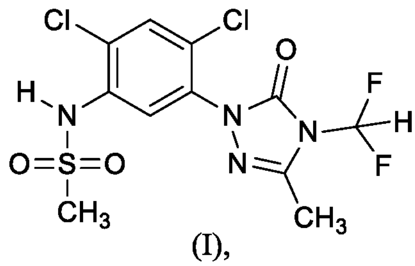

(I),

und (b) Propyzamid, eine Verbindung der Formel (II)

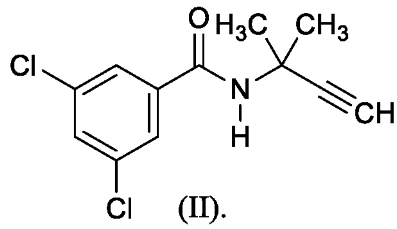

(II).

2. Die Zusammensetzung gemäß Anspruch 1, wobei das Gewichtsverhältnis der Verbindung der Formel (I) zu der Verbindung der Formel (II) im Bereich von etwa 1:18 bis etwa 1:4 liegt.

3. Die Zusammensetzung gemäß Anspruch 1 oder 2, des weiteren umfassend einen landwirtschaftlich akzeptablen Hilfs- oder Trägerstoff.

4. Die Zusammensetzung gemäß Anspruch 1 oder 2, welche synergistisch ist, wie nach der Colby-Gleichung bestimmt.

5. Ein Verfahren zur Bekämpfung unerwünschter Vegetation, welches das In-Kontakt-Bringen der Vegetation oder des Ortes derselben mit der Zusammensetzung gemäß Anspruch 1 oder 2 oder das Anwenden derselben auf den Boden umfasst, um das Auftreten oder Wachstum der Vegetation zu verhindern.

6. Ein Verfahren zur Bekämpfung unerwünschter Vegetation, welches das In-Kontakt-Bringen der Vegetation oder des Ortes derselben mit einer herbizid wirksamen Menge von:

a) Sulfentrazon, eine Verbindung der Formel (I)

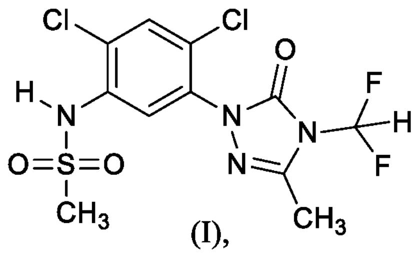

(I),

und (b) Propyzamid, eine Verbindung der Formel (II)

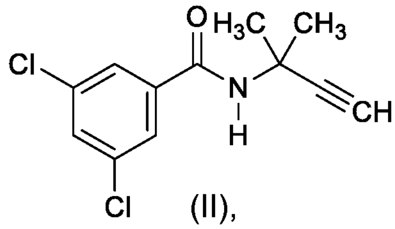

(II),

oder das Anwenden derselben auf den Boden umfasst, um das Auftreten oder Wachstum der Vegetation zu verhindern.

7. Das Verfahren gemäß Anspruch 6, wobei die unerwünschte Vegetation in Weizen, Gerste, Hafer, Roggen, Sorghum, Mais, Welschkorn, Hülsenfrüchten (zum Beispiel Gartenbohne, Ackererbse, Kichererbse, Linse und Ackerbohne), Canola, Ölsamenraps, Senfpflanzen, Sojabohnen, Wiesen, Grasland, Weiden, Brachland, Rasen, Baumschulen und Weingärten, im industriellen Vegetationsmanagement oder entlang von Wegen umfasst, wobei vorzugsweise die Verbindungen (a) und (b) auf Hülsenfrüchte angewandt werden.

8. Das Verfahren gemäß Anspruch 6, wobei die unerwünschte Vegetation nicht keimend bis unreif ist.

9. Das Verfahren gemäß Anspruch 6, wobei die Verbindungen (a) und (b) im Vorlauf angewandt werden oder vor dem Pflanzen in die unerwünschte Vegetation oder Nutzpflanze eingebracht werden oder im Nachlauf auf die unerwünschte Vegetation oder Nutzpflanze angewandt werden.

10. Das Verfahren gemäß Anspruch 6, wobei die unerwünschte Vegetation in einer Glyphosat-, Glufosinat-, Dicamba-, Phenoxyauxin-, Pyridyloxyauxin-, Aryloxyphenoxypropionsäureester-, Acetyl-CoA-Carboxylase-(ACCase)-Inhibitor-, Imidazolinon-, Acetolactatsynthase-(ALS)-Inhibitor-, 4-Hydroxy-phenylpyruvatdioxygenase-(HPPD)-Inhibitor-, Protoporphyrinogen-Oxidase-(PPO)-Inhibitor-, Triazin- oder Bromoxynil-toleranten Nutzpflanze bekämpft wird, wobei die tolerante Nutzpflanze vorzugsweise mehrere oder gestapelte Merkmale besitzt, die Toleranz gegenüber mehreren Herbiziden oder Inhibitoren mehrerer Wirkweisen verleihen.

11. Das Verfahren gemäß Anspruch 6, wobei die unerwünschte Vegetation ein herbizidresistentes oder -tolerantes Unkraut umfasst, wobei das resistente oder tolerante Unkraut ein Biotyp ist, der resistent oder tolerant gegenüber Acetolactatsynthase-(ALS)-Inhibitoren, Photosystem-II-Inhibitoren, Acetyl-CoA-Carboxylase-(ACCase)-Inhibitoren, synthetischen Auxinen, Photosystem-I-Inhibitoren, 5-Enolpyruvylshikimat-3-phosphat-(EPSP)-synthase-Inhibitoren, Microtubuli-Organisationsinhibitoren, Lipidsynthese-Inhibitoren, Protoporphyrinogenoxidase-(PPO)-Inhibitoren, Inhibitoren der Carotenoid-Biosynthese, Inhibitoren der Synthese sehr langkettiger Fettsäuren (VLCFA), Phytoendesaturase-(PDS)-Inhibitoren, Glutaminsynthase-Inhibitoren, 4-Hydroxyphenylpyruvatdioxygenase-(HPPD)-Inhibitoren, Mitose-Inhibitoren, Inhibitoren der Biosynthese von Cellulose, Herbiziden mit mehreren Wirkweisen, Quinclorac, Arylaminopropionsäuren, Difenzoquat, Endothall oder Organoarsenverbindungen ist.

12. Das Verfahren gemäß Anspruch 11, wobei das resistente oder tolerante Unkraut ein Biotyp mit Resistenz oder Toleranz gegenüber mehreren Herbiziden, mehreren chemischen Klassen oder Inhibitoren mehrerer herbizider Wirkweisen ist.

**Revendications**

1. Composition herbicide comprenant une quantité à effet herbicide de (a) sulfentrazone, un composé de formule (I)

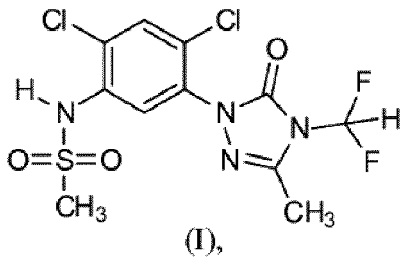

(I),

et (b) propyzamide, un composé de formule (II)

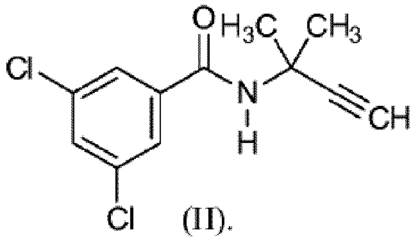

(II).

2. Composition selon la revendication 1, dans laquelle le rapport pondéral du composé de formule (I) au composé de formule (II) est dans la plage d'environ 1:18 à environ 1:4.

3. Composition selon la revendication 1 ou 2, comprenant encore un adjuvant ou véhicule acceptable en agriculture.

4. Composition selon la revendication 1 ou 2, qui est synergique comme déterminé par l'équation de Colby.

5. Procédé de lutte contre une végétation indésirable, qui comprend le fait de mettre en contact la végétation ou le lieu où elle se trouve avec, ou d'appliquer sur le sol pour prévenir la levée ou la croissance de la végétation, la composition selon la revendication 1 ou 2.

6. Procédé de lutte contre une végétation indésirable, qui comprend le fait de mettre en contact la végétation ou le lieu où elle se trouve avec, ou d'appliquer sur le sol pour prévenir la levée ou la croissance de la végétation, une quantité à effet herbicide de :

a) sulfentrazone, un composé de formule (I)

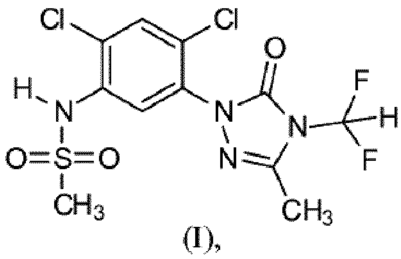

(I),

et (b) propyzamide, un composé de formule (II)

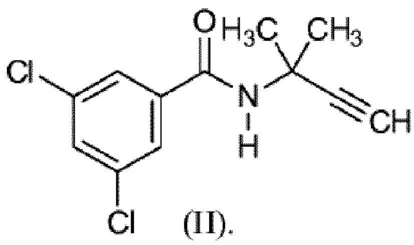

(II).

7. Procédé selon la revendication 6, dans lequel on lutte contre la végétation indésirable dans des cultures de blé, d'orge, d'avoine, de seigle, de sorgho, de maïs, de légumineuses (par exemple haricot commun, pois fourrager, pois chiche, lentille et fève), de colza canola, de colza oléagineux, de moutardes, de soja, des pâturages, des herbages, des prairies, des jachères, du gazon, des vergers et des vignes, des zones d'aménagement végétal intégré ou des voies de passage, où on applique de préférence les composés (a) et (b) sur des cultures de légumineuses.

8. Procédé selon la revendication 6, dans lequel la végétation indésirable est de non en germination à immature.

9. Procédé selon la revendication 6, dans lequel on applique les composés (a) et (b) en pré-levée ou en pré-semis avec incorporation sur la végétation indésirable ou la culture ou on les applique en post-levée sur la végétation indésirable ou la culture.

10. Procédé selon la revendication 6, dans lequel on lutte contre la végétation indésirable dans une culture de plante tolérante au glyphosate, au glufosinate, au dicamba, aux auxines de type phénoxy, aux auxines de type pyridyloxy, aux aryloxyphénoxypropionates, aux inhibiteurs d'acétyl CoA carboxylase (ACCase), aux imidazolinones, aux inhibiteurs d'acétolactate synthase (ALS), aux inhibiteurs de 4-hydroxyphényl-pyruvate dioxygénase (HPPD), aux inhibiteurs de protoporphyrinogène oxydase (PPO), aux triazines ou au bromoxynil, où la plante cultivée tolérante possède de préférence des caractères multiples ou empilés conférant une tolérance à de multiples herbicides ou à des inhibiteurs à multiples modes d'action.

11. Procédé selon la revendication 6, dans lequel la végétation indésirable comprend une adventice tolérante ou résistante à des herbicides, où l'adventice résistante ou tolérante est un biotype résistant ou tolérant aux inhibiteurs d'acétolactate synthase (ALS), aux inhibiteurs du photosystème II, aux inhibiteurs d'acétyl CoA carboxylase (ACCase), aux auxines synthétiques, aux inhibiteurs du photosystème I, aux inhibiteurs de 5-énolpyruvylshikimate-3-phosphate (EPSP) synthase, aux inhibiteurs de l'assemblage des microtubules, aux inhibiteurs de la synthèse des lipides, aux inhibiteurs de protoporphyrinogène oxydase (PPO), aux inhibiteurs de la biosynthèse des caroténoïdes, aux inhibiteurs d'acides gras à très longue chaîne (AGTLC), aux inhibiteurs de phytoène désaturase (PDS), aux inhibiteurs de glutamine synthétase, aux inhibiteurs de 4-hydroxyphényl-pyruvate dioxygénase (HPPD), aux inhibiteurs de la mitose, aux inhibiteurs de la biosynthèse de la cellulose, à des herbicides à multiples modes d'action, au quinclorac, aux acides arylaminopropioniques, au difenzoquat, à l'endothall ou aux organoarsénieux.

12. Procédé selon la revendication 11, dans lequel l'adventice résistante ou tolérante est un biotype à résistance ou tolérance à de multiple herbicides, de multiples classes chimiques, ou des inhibiteurs à multiples modes d'action d'herbicides..

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61868234 A
- AU 2011204809
- US 2009156401 A
- US 2004266623 A
- US 2010292082 A
- US 2011312494 A


### Non-patent literature cited in the description


- **GRICHAR, W.** Use of Sulfentrazone in a Peanut (Arachis hypogaea) Herbicide Program. *THE TEXAS JOURNAL OF AGRICULTURE AND NATURAL RESOURCES,* 2006, vol. 19, 72-79
- an interaction of two or more factors such that the effect when combined is greater than the predicted effect based on the response of each factor applied separately. Herbicide Handbook. Weed Science Society of America, 2007
- **COLBY, S. R.** Calculation of the synergistic and antagonistic response of herbicide combinations. *Weeds,* 1967, vol. 15, 20-22
- McCutcheon's Detergents and Emulsifiers Annual. MC Publishing Corporation, 1998
- Encyclopedia of Surfactants. Chemical Publishing Company, 1980, vol. I-III